# EUROPÄISCHE PATENTSCHRIFT

(11) **EP 2 403 786 B1**
(45) Veröffentlichungstag und Bekanntmachung des Hinweises auf die Patenterteilung: **21.08.2013**
(21) Anmeldenummer: 10709388.2
(22) Anmeldetag: 18.02.2010
(51) Int. Cl.: B65G 47/51

(54) **ANORDNUNG UND VERFAHREN ZUM ERKENNEN UND STEUERN VON MIT EINEM CODE VERSEHENEN STÜCKGÜTERN**
ARRANGEMENT AND METHOD FOR DETECTING AND CONTROLLING PIECE GOODS HAVING A CODE
ENSEMBLE ET PROCÉDÉ PERMETTANT D'IDENTIFIER ET DE DIRIGER DES MARCHANDISES DE DÉTAIL POURVUES D'UN CODE

(30) Priorität: 02.03.2009 DE 102009011229
(43) Veröffentlichungstag der Anmeldung: 11.01.2012
(73) Patentinhaber: Knapp AG, 8075 Hart bei Graz (AT)
(72) Erfinder: FREUDELSPERGER, Karl, A-8075 Hart bei Graz (AT)
(74) Vertreter: Hanke, Hilmar
(86) Internationale Anmeldenummer: PCT/EP2010/001014
(87) Internationale Veröffentlichungsnummer: WO 2010/099873

(56) Entgegenhaltungen:
- EP-A1- 0 310 411
- WO-A1-92/01272
- WO-A1-98/47790
- WO-A1-03/074201
- DE-A1- 4 225 041
- DE-A1-102006 035 050
- DE-U1- 9 106 292
- GB-A- 1 445 100
- US-A- 3 252 595
- US-A- 4 819 783
- US-A- 6 085 914

## Beschreibung

Die Erfindung betrifft eine Anordnung und ein Verfahren zum Erkennen und Steuern von mit einem Code versehenen Stückgütern, wobei die Stückgüter vereinzelt und zentriert auf einer im Querschnitt V-förmigen Förderstrecke durch eine Scan-Einrichtung mit mehreren Einzelscannern geleitet und in der Scan-Einrichtung durch Lesen des Codes des Stückgutes als Ist-Daten identifiziert und mit den in einem Zentralrechner gespeicherten Soll-Daten der Stückgüter-Menge verglichen oder erfasst werden, und bei Nicht-Übereinstimmung der Soll-Daten mit den Ist-Daten das Stückgut ausgesondert wird.

Nach dem Stand der Technik werden unterschiedliche Stückgüter sortiert nach Sorten in einem Lager in Regalen an einem bestimmten Ort gelagert. Bei Erteilung eines Kommissionierauftrages eines Kunden werden die gewünschten Waren bzw. Stückgüter manuell durch eine Bedienungsperson oder beispielsweise bei einem Großhändler automatisch in einer Kommissionieranlage dem Bestimmungsort im Lager entnommen und einem Transportbehälter, beispielsweise einer Wanne, zugeführt. Die Wanne enthält vorzugsweise die Produkte eines kompletten Kommissionierauftrages, wird zu einem Versandbereich geleitet und von dort schließlich zum Kunden transportiert.

Die Schwierigkeit besteht nun darin, sicherzustellen, dass jedem Kommissionierauftrag die richtigen Produkte zugeordnet wurden. Um dies zu gewährleisten, muß jeder Auftrag kontrolliert werden.

Eine Möglichkeit der Kontrolle ist beispielsweise das Wiegen eines leeren und eines gefüllten Behälters bei einem Kommissionierauftrag und die Errechnung des Gesamtgewichts des gefüllten Behälters aus den bekannten Einzelgewichten der Stückgüter nebst dem bekannten Leergewicht des Behälters. Viele unterschiedliche Stückgüter besitzen jedoch vielfach ein in etwa gleiches Gewicht, so dass die Wiegemethode nur bedingt zuverlässig ist. Ergibt sich beim Wiegen keine Differenz zwischen dem Sollgewicht und dem Istgewicht eines Kommissionierauftrags, so kann also nicht unbedingt auf die korrekte Zusammenstellung eines gewünschten Kommissionierauftrags geschlossen werden. Ergibt sich eine Differenz zwischen dem Sollgewicht und dem Istgewicht, so ist der Fehler großenteils unbekannt und kann nur mühevoll vielfach dadurch behoben, dass sämtliche Einzelprodukte des Behälters nochmals aus dem Behälter genommen und manuell kontrolliert werden müssen, um definitiv festzustellen, welches Produkt fehlt oder zu viel vorhanden ist. Das bedeutet nicht nur einen enormen Zeitaufwand, sondern auch einen hohen Kostenfaktor, der sich nicht zuletzt im Preis des Produkts niederschlägt.

Um Kosten und Aufwand herabzusenken, werden nach dem Stand der Technik die Produkte bzw. Stückgüter vorab, d.h. noch vor Einlagerung der Stückgüter in das Lager, mit einem eigenen Barcode versehen. Die so gekennzeichneten Stückgüter werden für eine Kontrolle aus dem Behälter entnommen und manuell einer Leseeinrichtung bzw. einem Handscanner zugeführt, die bzw. der in der Lage ist, das Produkt über den Barcode zu identifizieren. Es versteht sich, dass ein derartiges Identifizierungsverfahren gleichwohl aufwändig ist.

Um eine Vielzahl von Stückgütern vergleichsweise schnell zwecks Einleitung gegebenenfalls von Korrekturmaßnahmen zu erkennen, ist aus der gattungsgemäßen DE 102 09 864 A1 die eingangs genannte "Checkstation" bekannt, deren im Querschnitt V-förmige Förderstrecke eine schräge Rutsche ist, auf der die vereinzelt manuell zugeführten Stückgüter aufgrund ihrer Schwerkraft durch einen Scan-Tunnel rutschen und hierbei gelesen und kontrolliert und gegebenenfalls anschließend aussortiert werden. Es hat sich jedoch gezeigt, dass die Rutschgeschwindigkeit undefiniert und begrenzt ist und ein zuverlässiges Zentrieren im V-Winkel der Rutsche und zuverlässiges mehrdimensionales Scannen bei hohem Durchsatz an Stückgütern nur bedingt möglich ist.

Aufgabe der Erfindung ist die Schaffung einer Anordnung und eines Verfahrens der eingangs genannten Art, welche bzw. welches in der Lage ist, eine Vielzahl von Stückgütern mit einfachen Mitteln bei schnellem Durchsatz an Stückgütern und gleichwohl großer Zuverlässigkeit eines dreidimensionalen Scannens zu erkennen und zu sortieren.

Gelöst wird die der Erfindung zugrundeliegende Aufgabe durch eine Anordnung der im Patentanspruch 1 angegebenen Art, vorteilhaft weitergebildet durch die Merkmale der Ansprüche 2 bis 12.

Ein erfindungsgemäßes Verfahren kennzeichnet sich durch die Merkmale des Patentanspruchs 13, vorteilhaft weitergebildet durch die Merkmale der Patentansprüche 14, bis 15. Wesen der erfindungsgemäßen Anordnung zum Erkennen und Steuern von mit einem Code versehenen Stückgütern von in einer Kommissionieranlage kommissionierten Stückgütern ist, im Bereich des Längsendes der Förderstrecke mehrere Aussteuer-Einrichtungen vorzusehen, wobei jede der Aussteuer-Einrichtungen einen positionierten Auftragsbehälter eines bestimmten Kommissionierauftrags mit Stückgütern des bestimmten Kommissionierauftrags befüllt, und nicht-erkannte oder auszusortierenden Stückgüter am Längsende der Förderstrecke in einen Behälter abgegeben werden. Die Stückgüter verschiedener Kommissionieraufträge werden chaotisch verteilt auf dem Zentralband eines Kommissionierautomaten der Anordnung zugeführt.

Bevorzugt ist die im Querschnitt V-förmige Förderstrecke für ein schnelles zuverlässiges Scannen der Stückgüter in besonderer Weise ausgebildet. Der eine V-Schenkel der Förderstrecke ist ein angetriebenes Stückgut-Förderelement, vorzugsweise ein angetriebenes Umlauf-Förderband, auf dem das geförderte Stückgut rutschfest aufliegt, während der andere V-Schenkel der Förderstrecke ein stationäres Stückgut-Gleitelement, vorzugsweise ein Gleitblech, ist, auf dem das geförderte Stückgut rutscht.

Bei jeder Aussteuer-Einrichtung ist an der seitlichen Abgabestelle ein Zwischenpuffer mit bodenseitig öffenbarer Klappe für eine gesteuerte Abgabe von gepufferten erkannten Stückgütern in einen positionierten Auftragsbehälter vorgesehen, und/oder am Längsende der ersten Förderstrecke ist ein Zwischenpuffer mit bodenseitig öffenbarer Klappe für eine gesteuerte Abgabe von gepufferten nicht-erkannten Stückgütern in einen bereitgestellten Behälter vorgesehen.

Die durch den Zentralrechner ansteuerbare Aussteuer-Einrichtung weist zumindest einen Querschieber, zumindest eine Weiche oder zumindest eine Schwenkklappe auf, die eine Auswurföffnung freigibt.

Die erste Förderstrecke verläuft vorzugsweise horizontal, wobei die beiden V-Schenkel einen Winkel von mindestens 90 Grad einschließen, vorzugsweise exakt einen rechten Winkel bilden, und zumindest einer der V-Schenkel, vorzugsweise beide V-Schenkel, zur Horizontalen einen Winkel von 45 Grad bilden.

Im besonderen ist die erste Förderstrecke in Längsrichtung aus zwei zueinander fluchtenden (ersten und zweiten) Förderabschnitten zusammengesetzt, bestehend jeweils aus einem Stückgut-Förderelement und einem Stückgut-Gleitelement, wobei sich dem Stückgut-Förderelement des ersten Förderabschnitts das Stückgut-Gleitelement des zweiten Förderabschnitts fluchtend anschließt, und umgekehrt sich dem Stückgut-Gleitelement des ersten Förderabschnitts das Stückgut-Förderelement des zweiten Förderabschnitts fluchtend anschließt.

Das Stückgut-Gleitelement kann lichtdurchlässig ausgebildet sein, um auch die gleitende Unterseite eines geförderten Stückguts scannen zu können. Bevorzugt ist jedoch vorgesehen, dass dem nicht licht-transparenten Stückgut-Gleitelement ein stationärer licht-transparenter Abschnitt, insbesondere ein Glasfenster, fluchtend unmittelbar nachgeordnet ist, wobei die Länge des Stückgut-Förderelements in etwa der Summe der Einzellängen des Stückgut-Gleitelements und des licht-transparenten Abschnitts entspricht.

Im Bereich des licht-transparenten Abschnitts, insbesondere des Glasfensters, ist eine dreidimensionale Scan-Einrichtung mit vorzugsweise drei Einzelscannern vorgesehen ist, deren erster Einzelscanner durch den licht-transparenten Abschnitt den möglichen Code auf der Gleitfläche eines gefördertes Stückgut liest, und deren andere Einzelscanner mögliche Codes anderer Seitenflächen des geförderten Stückguts lesen, jedoch nicht die Seitenfläche des Stückguts liest, welche auf dem Stückgut-Förderelement rutschfest aufliegt.

Eine besonders effektiv arbeitende Anordnung mit hoher Durchsatzleistung an Stückgütern sieht vor, dass jeder der beiden Förderabschnitte eine (erste bzw. zweite) Scan-Einrichtung mit vorzugsweise jeweils drei Einzelscannern sowie einen (ersten bzw. zweiten) licht-transparenten Abschnitt, insbesondere ein (erstes bzw. zweites) Glasfenster, aufweist, wobei ein Einzelscanner des zweiten Förderabschnitts durch den zugeordneten zweiten licht-transparenten Abschnitts einen möglichen Code der bislang ungelesenen Seitenfläche des Stückguts liest, welche zuvor auf dem Stückgut-Förderelement des ersten Förderabschnitts rutschfest auflag. Im Betrieb zieht also das erste Band ein Stückgut über das erste Glasfenster. Hier wird die erste unbekannte Seite gescannt. Danach wechselt das (zweite) Band auf die andere Seite, um die zweite unbekannte Seite über das zweite Glasfenster ziehen zu können.

Im besonderen kennzeichnet sich ein erfindungsgemäßes Verfahren zum Erkennen und Steuern von mit einem Code versehenen Stückgütern dadurch, dass die Stückgüter mehrerer Kommissionieraufträge in chaotischer Verteilung auf ein Zentralband eines Kommissionierautomaten der Kommissionieranlage vorzugsweise zeitgleich abgegeben und über das Zentralband und gegebenenfalls Anschlussförderbänder zu einer Verteilstation, insbesondere einer Versandstation, gefördert werden, und dass die Stückgüter in der Verteilstation vorzugsweise durch eine Bedienungsperson paarweise und voneinander beabstandet zeitgleich dem Eingang der ersten Förderstrecke zugeführt werden.

Zwei Bedienungspersonen können gegebenenfalls in der Verteilstation ein einziges Zentralband mittels zweier paralleler Anordnungen mit mittiger Positionierung der gleichen Auftragsbehälter bedienen.

Ein mit Stückgütern gefüllter Auftragsbehälter eines kompletten Kommissionierauftrags kann vorzugsweise zu einer Verladestation oder einer Parkstation gefördert oder transportiert werden.

Ein Erkennungs-Protokoll über einen korrekten Kommissionierauftrag sowie ein Protokoll über eine Fehlkommissionierung können gegebenenfalls erstellt werden.

Ist der von der Bedienungsperson gewählte Abstand zweier gleichzeitig zugeführter Stückgüter zu gering, um bei der eingestellten in der Regel hohen Fördergeschwindigkeit der ersten Förderstrecke im Bereich von 1 m/sec ein zuverlässiges Scannen von zwei voneinander beabstandeten Stückgütern und ein zuverlässiges Ausschleusen bei der Aussteuer-Einrichtung zu ermöglichen, besorgt eine Abstandserkennungseinrichtung, insbesondere eine Abstandslichtschranke, eine automatische Abschaltung des Antriebs der ersten Förderstrecke bzw. des Antriebs des Stückgut-Förderelements der ersten Förderstrecke. Die Bedienungsperson kann dann die zu dicht beabstandeten Stückgüter mit neuem größeren Abstand wieder neu in die Förderstrecke einlegen und den Antrieb durch Knopfdruck an einem Terminal neu starten.

Es ist angestrebt, den Abstand zwischen den zu scannenden Stückgütern möglichst gering zu halten, insbesondere im Bereich von 200mm. Durch den möglichen geringen Stückgüter-Abstand können gleichzeitig zwei Stückgüter in zwei voneinander beabstandeten Scan-Einrichtungen gelesen werden, was angestrebt ist, um eine hohe Durchsatzrate zu erzielen. Durch Taktverfolgung kombiniert mit der Identifikation der Kameras bzw. Scanner und der Messung der Stückgut-Länge durch die Abstandslichtschranke weiß man, welcher Code zu welchem Stückgut gehört bzw. welches Stückgut keinen Code besitzt.

Erfindungsgemäß ist also bei der ersten Förderstrecke nur die eine Seite des "V-Bandes" ein angetriebenes Band. Die andere Seite ist ein fixes Gleitblech. Nur durch diese Kombination richten sich die Stückgüter automatisch im V-Winkel aus, und nur dieses Ausrichten ermöglicht den Scannern bzw. Kameras eine optimale Bilderfassung. Wären beide Seiten des "V-Bandes" angetrieben, würde die Ausrichtung nicht zuverlässig erfolgen, insbesondere nicht bei der erfindungsgemäßen hohen Fördergeschwindigkeit, vorzugsweise im Bereich von 1 m/sec. Es kommt auf die "Relativgeschwindigkeit" zwischen den beiden Seiten des "V-Bandes" an, die ein örtliches Verdrehen eines zugeführten Stückguts solange ermöglicht, bis das Stückgut seine stabile Lage im V-Winkel gefunden hat. Es wäre also auch theoretisch denkbar, statt des fixen Gleitblechs ein weiteres angetriebenes Umlaufband mit anderer Geschwindigkeit zu verwenden, ist jedoch in der Praxis aufgrund des größeren Aufwands unzweckmäßig.

Es wird mithin erfindungsgemäß eine Anordnung vorgeschlagen, die sich aufgrund der hohen definierten einstellbaren Fördergeschwindigkeit der ersten Förderstrecke (im Gegensatz zur bekannten eingangs genannten "Rutsche" des Stands der Technik) und aufgrund des geringen Mindestabstands zwischen zwei zu scannenden Stückgütern mit hoher Durchsatzrate bei hoher Zuverlässigkeit betreiben lässt, insbesondere dann, wenn zwei voneinander beabstandete Scan-Einrichtungen mit jeweils drei Einzelscannern vorgesehen sind.

In besonderer Ausgestaltung befindet sich die Anordnung allein oder zusammen mit einer weiteren gleichgearteten Anordnung also in einem Anschluss an ein Zentralband eines Kommissionierautomaten, der bevorzugt mehrere Kommissionieraufträge gleichzeitig mit großer Effektivität abarbeitet und kommissionierte Stückgüter chaotisch verteilt auf das Zentralband auswirft. Die unsortierten bzw. chaotisch verteilten Stückgüter werden dann bis zu einer Verteilstation, insbesondere zu einer Versandstation, gefördert und erst dort in der erfindungsgemäßen Anordnung separiert und zu Kommissionieraufträgen in dort bereitgestellten Auftragsbehältern mit Hilfe des Zentralrechners der Kommissionieranlage und geeigneter Software zusammengestellt, der die Aussteuer-Einrichtungen der Anordnung entsprechend ansteuert. Besonderer Vorteil der Erfindung neben der großen Effektivität des "chaotischen Kommissionierens" und neben der Zuverlässigkeit des Sortierens und des schnellen Zusammenstellens der Kommissionieraufträge erst am "Zielort" der Versandstation ist, dass im Bereich des Kommissionierautomaten keine Auftragsbehälter für das Zusammenstellen der einzelnen Kommissionieraufträge wie nach dem Stand der Technik benötigt werden. Es entfällt somit bei der Erfindung das logistische Problem des Leerbehältertransports zum Kommissionierautomaten. Die Leerbehälter müssen nur bis zur Versandstation bzw. Verteilstation transportiert werden, um dort als Auftragsbehälter für Kommissionieraufträge zu dienen. Die Behälter legen also kurze Wege beispielsweise von einem Lastkraftwagen zur Verteilstation zurück, die praktisch als "Kommissionierstation" betrieben wird.

Bei entsprechendem konstruktiven Aufwand kann das System vollautomatisiert und auf die vorgenannte(n) Bedienungsperson(en) verzichtet werden.

Im folgenden werden die erfindungsgemäße Anordnung und das erfindungsgemäße Verfahren anhand von Ausführungsbeispielen näher erläutert. Es zeigen:
- Figur 1: eine den Kern der Erfindung enthaltende Anordnung zur Erkennung und Steuerung von mit einem Code versehenen Stückgütern in einer schematischen perspektivischen Seitenansicht,
- Figur 2: die Einzelheit des Eingangsbereichs der Anordnung nach Figur 1 schematisch perspektivisch, mit Arbeitsfläche, Terminal, sowie erster, zweiter und dritter Förderstrecke, insbesondere den Arbeitsplatz einer Bedienungsperson,
- Figur 3: die erste Förderstrecke bestehend aus zwei Förderabschnitten nebst Einzelscannern gesehen von vorne,
- Figur 4: eine schematische Draufsicht auf die Anordnung nach Figur 1 im Bereich der Einzelscanner,
- Figur 5: eine Vergleichsanordnung ähnlich Figur 3 mit einem Scan-Tunnel,
- Figur 6: eine schematische Draufsicht auf die Anordnung nach Figur 1 im Bereich der Aussteuer-Einrichtung,
- Figur 7: eine Prinzipskizze der Anordnung in schematischer Draufsicht, und
- Figur 8: eine Prinzipskizze der erfindungsgemäßen Anordnung in schematischer Draufsicht ähnlich Figur 7.

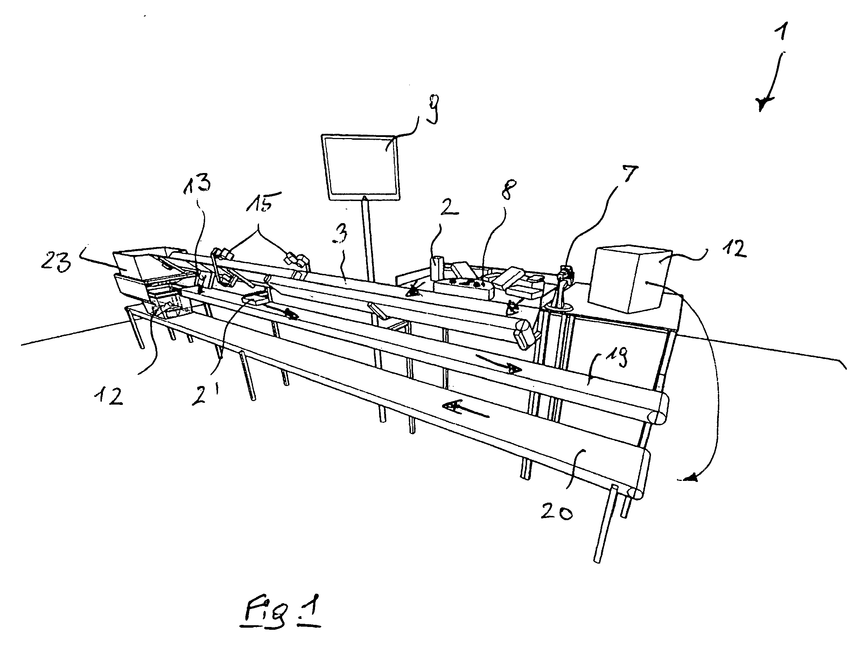

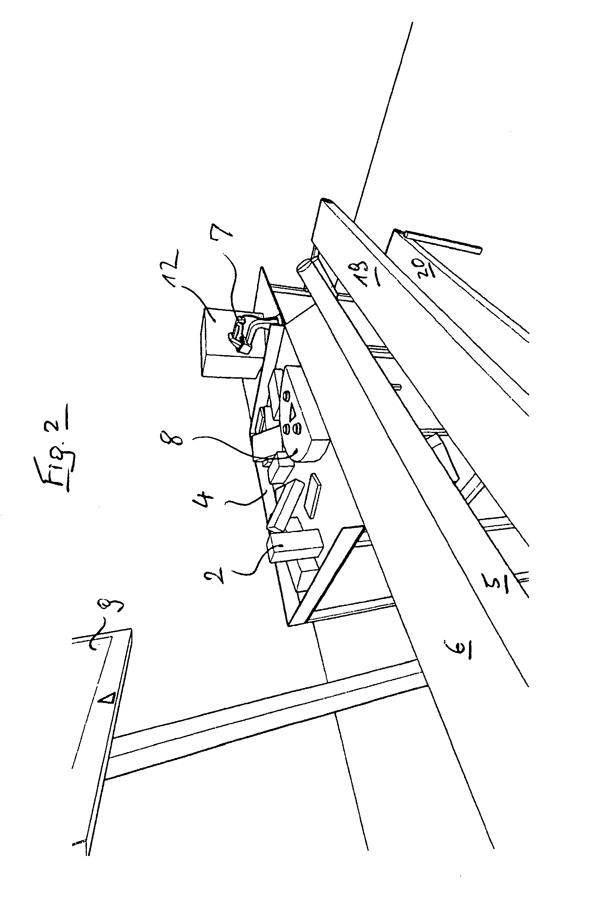

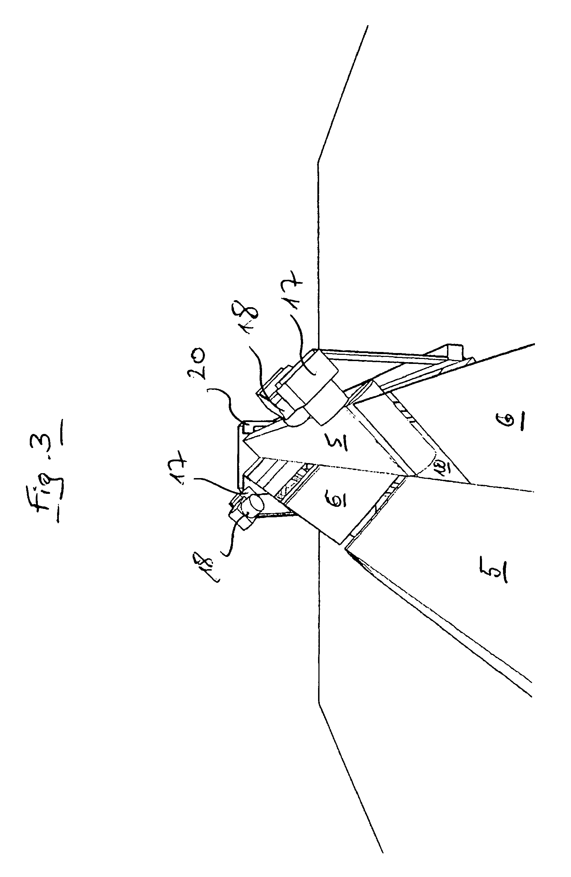

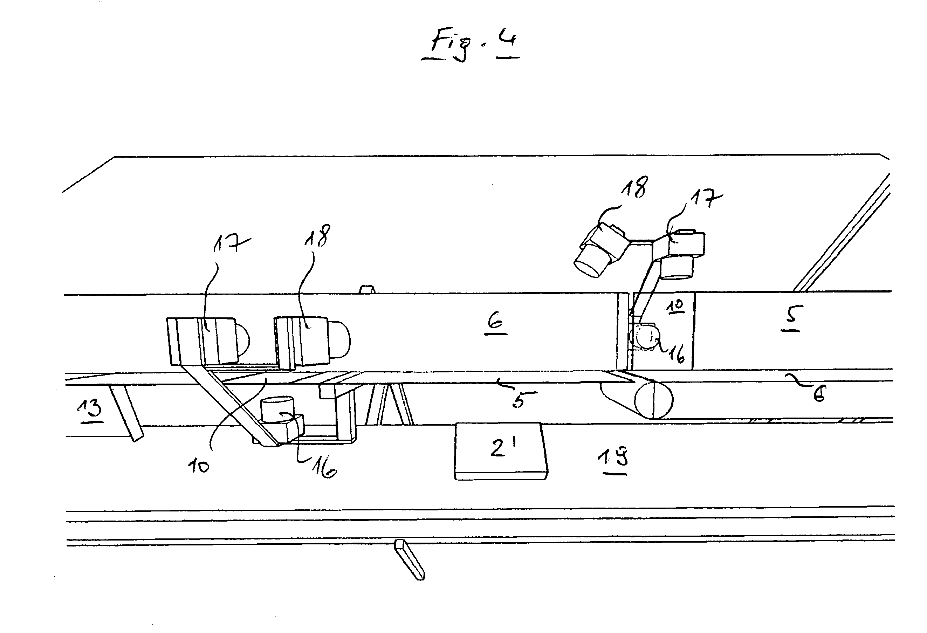

Die Erfindung wird anhand der in den Figuren 1 bis 7 gezeigten, den Kern der Erfindung enthaltenden Anordnung 1 zum Erkennen und Steuern von mit Codes versehenen Stückgütern beschrieben. Die Anordnung 1 ist Teil einer Kommissionieranlage, bei der Stückgüter - anders als bei der vorliegenden Erfindung - in nicht näher interessierender Weise kommissioniert werden. Anders als bei der Erfindung werden hier die kommissionierten Stückgüter eines einzigen Kommissionierauftrages nur in einem einzigen (Auftrags-)Behälter 12 überprüft und gesammelt, und auftragsfremde Stückgüter aussortiert.

Die Codes sind Data-Matrix-Codes, in dem folgende Dateninhalte codiert sind: Produktidentifikation, Chargeninformation, Ablaufdatum, Seriennummer.

Die Kommissionieranlage besitzt einen nicht veranschaulichten Zentralrechner, an den die nachfolgend beschriebene Anordnung über ein Terminal angeschlossen ist.

Die Anordnung 1 zum Erkennen und Steuern einer Menge von mit einem Code versehenen Stückgütern 2 besitzt eine im Querschnitt V-förmige erste Förderstrecke 3, wobei die Stückgüter eines Kommissionierauftrages vereinzelt und zentriert auf einer durch eine Scan-Einrichtung 15 mit mehreren Einzelscannern 16, 17, 18 geleitet und in der Scan-Einrichtung 15 durch Lesen des Codes des Stückgutes 2 als Ist-Daten identifiziert und mit den in dem Zentralrechner gespeicherten Soll-Daten der Stückgüter-Menge verglichen werden, und bei Nicht-Übereinstimmung der Soll-Daten mit den Ist-Daten das Stückgut ausgesondert wird.

Im besonderen ist der eine V-Schenkel der im Querschnitt V-förmigen ersten Förderstrecke 3 ein angetriebenes Stückgut-Förderelement 5, insbesondere ein angetriebenes Umlauf-Förderband, auf dem das geförderte Stückgut 2 rutschfest aufliegt.

Der andere V-Schenkel der ersten Förderstrecke 3 ist hingegen ein stationäres Stückgut-Gleitelement 6, insbesondere ein Gleitblech, auf dem das geförderte Stückgut 2 rutscht.

Die erste Förderstrecke 3 ist horizontal angeordnet.

Die beiden V-Schenkel schließen einen Winkel von mindestens 90 Grad ein und bilden im Ausführungsbeispiel der Zeichnungen exakt einen rechten Winkel.

Zumindest einer der V-Schenkel bildet zur Horizontalen einen Winkel von 45 Grad, im Ausführungsbeispiel der Zeichnungen beide V-Schenkel.

Insbesondere ist die erste Förderstrecke 3 in Längsrichtung aus zwei zueinander fluchtenden (ersten und zweiten) Förderabschnitten zusammengesetzt, bestehend jeweils aus einem Stückgut-Förderelement 5 und einem Stückgut-Gleitelement 6, wobei sich dem Stückgut-Förderelement 5 des ersten Förderabschnitts das Stückgut-Gleitelement 6 des zweiten Förderabschnitts fluchtend anschließt, und umgekehrt sich dem Stückgut-Gleitelement 6 des ersten Förderabschnitts das Stückgut-Förderelement 5 des zweiten Förderabschnitts fluchtend anschließt.

Dem nicht licht-transparenten Stückgut-Gleitelement 6 ist ein stationärer licht-transparenter Abschnitt 10, insbesondere ein Glasfenster, fluchtend unmittelbar nachgeordnet, wobei die Länge des Stückgut-Förderelements 5 in etwa der Summe der Einzellängen des Stückgut-Gleitelements 6 und des licht-transparenten Abschnitts 10 entspricht.

Im Bereich des licht-transparenten Abschnitts 10 bzw. des Glasfensters ist eine dreidimensionale Scan-Einrichtung 15 mit vorzugsweise drei Einzelscannern 16, 17, 18 vorgesehen, deren erster Einzelscanner 16 durch den licht-transparenten Abschnitt 10 den möglichen Code auf der Gleitfläche eines gefördertes Stückgut liest, und deren andere Einzelscanner 17, 18 mögliche Codes anderer Seitenflächen des geförderten Stückguts lesen, jedoch nicht die Seitenfläche des Stückguts liest, welche auf dem Stückgut-Förderelement 5 rutschfest aufliegt.

Jeder der beiden Förderabschnitte weist eine (erste bzw. zweite) Scan-Einrichtung 15 mit vorzugsweise jeweils drei Einzelscannern 16, 17, 18 sowie einen (ersten bzw. zweiten) licht-transparenten Abschnitt 10 bzw. ein (erstes bzw. zweites) Glasfenster auf, wobei ein Einzelscanner 16 des zweiten Förderabschnitts durch den zugeordneten zweiten licht-transparenten Abschnitts 10 einen möglichen Code der bislang ungelesenen Seitenfläche des Stückguts liest, welche zuvor auf dem Stückgut-Förderelement 5 des ersten Förderabschnitts rutschfest auflag.

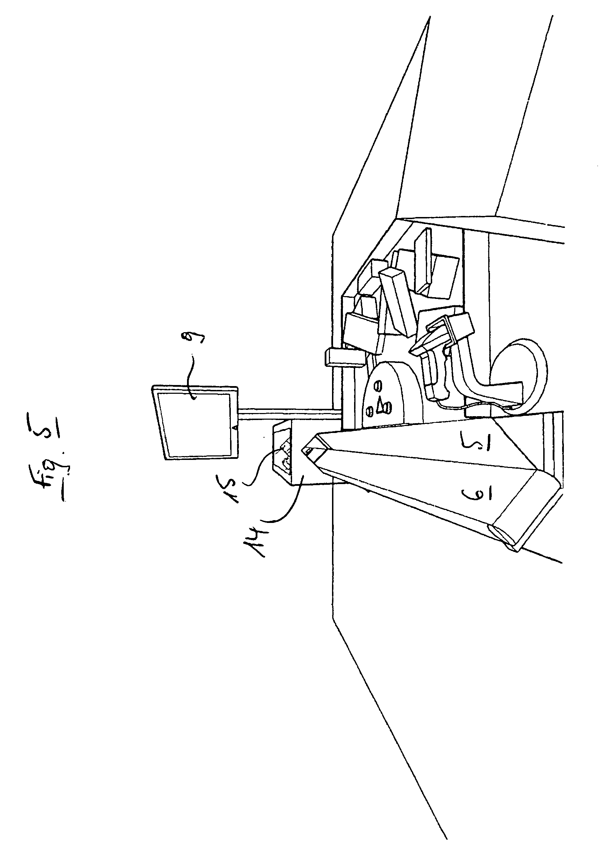

Die Scan-Einrichtungen 15 sind gegebenenfalls in einem Scantunnel 14 gemäß Figur 5 angeordnet.

Im Bereich des Längsendes der ersten Förderstrecke 3 ist eine Aussteuer-Einrichtung 13 für einen seitlichen oder unteren Auswurf von durch die Scan-Einrichtungen 15 nicht-erkannten oder auszusortierenden Stückgütern 2' vorgesehen.

Ausgeworfene nicht-erkannte Stückgüter 2' können auf einer zweiten Förderstrecke 19 für ein manuelles Scannen durch einen Handscanner 7 und gegebenenfalls für ein Aussortieren in den Bereich des Eingangs der ersten Förderstrecke 3 zurück gefördert und gegebenenfalls in einem bereitgestellten Behältnis aufgenommen werden.

Ein leerer oder mit handgescannten Stückgütern befüllter Behälter 12 ist auf einer dritten Förderstrecke 20 aus dem Bereich des Eingangs der ersten Förderstrecke 3 unter das Längsende der ersten Förderstrecke in eine Bereitstellungsposition förderbar.

Durch die Scan-Einrichtungen 15 erkannte Stückgüter können am Längsende der ersten Förderstrecke 3 in den bereitgestellten Behälter 12 abgegeben werden.

Am Längsende der ersten Förderstrecke 3 ist ein Zwischenpuffer 23 mit bodenseitig öffenbarer Klappe für eine gesteuerte Abgabe von gepufferten gescannten Stückgütern 2 in den bereitgestellten Behälter 12 vorgesehen.

Die durch den Zentralrechner ansteuerbare Aussteuer-Einrichtung 13 weist zumindest einen Querschieber, zumindest eine Weiche oder zumindest eine Schwenkklappe 21 auf, die eine Auswurföffnung freigibt.

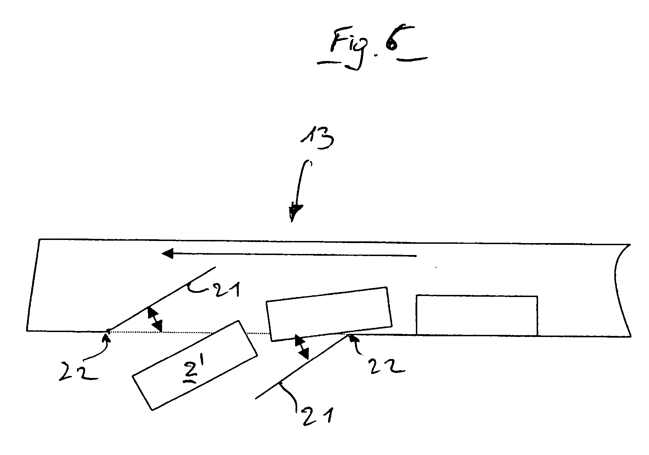

Die Schwenkklappe 21 kann als eine gegenläufig angesteuerte Doppelklappe mit zwei Schwenkachsen 22 gemäß Figur 6 ausgebildet sein.

Das Terminal umfasst eine Tastatur 8, einen Bildschirm 9 und eine bidirektionale Leitungsverbindung zu den Einzelscannern 16, 17, 18 der Scan-Einrichtungen 15 sowie zum Handscanner 7 für einen Anschluss an den Zentralrechner zur Erkennung der Soll-Daten bzw. Identifizierung der Stückgüter, insbesondere der Stückgüter eines kompletten Kommissionierauftrages, sowie für einen Vergleich der Ist-Daten mit den Soll-Daten der Stückgüter-Menge.

Ferner ist ein Distanzhalter für ein zeitgleiches manuelles Eingeben von zwei voneinander beabstandeten Stückgütern 2 auf die erste Förderstrecke 3 vorgesehen. Im Ausführungsbeispiel der Zeichnungen ist der Distanzhalter die Tastatur 8 des Terminals, wie dies beispielsweise den Figuren 1 bis 3 zu entnehmen ist.

Eingangsseitig befindet sich ein Zuführtisch 4 für die Stückgüter 2 etwa in Höhe des Eingangs der ersten Förderstrecke 3.

Schließlich ist eine (nicht veranschaulichte) Abstandslichtschranke zwecks automatischer Abschaltung des Antriebs des Stückgut-Förderelements 5 bei Unterschreitung eines Mindestabstands von zwei aufeinanderfolgenden zu scannenden Stückgütern vorgesehen. Ähnlich dem ersten Einzelscanner 16 hinter dem Glasfenster, befindet sich die Abstandslichtschranke hinter dem Stückgut-Gleitelement 6 bzw. Gleitblech und erkennt durch eine Öffnung im Gleitblech ein vorbeigefördertes Stückgut, insbesondere dessen Länge, sowie den Abstand zwischen zwei geförderten Stückgütern durch Zeitmessung. Aufgrund der bekannten Fördergeschwindigkeit der ersten Förderstrecke 3 ergibt sich der (Mindest-)Abstand zwischen zwei geförderten Stückgütern, den es zu kontrollieren gilt. Wird der Mindestabstand unterschritten, stoppt automatisch das Stückgut-Förderelement 5 bzw. das Umlaufband. Eine Bedienungsperson positioniert dann die zu eng gesetzten Stückgüter auf der ersten Förderstrecke 3 neu und startet erneut das Umlaufband durch Knopfdruck an der Tastatur 8.

Im Betrieb werden die Stückgüter 2 eines Kommissionierauftrages durch eine Bedienungsperson 24 aus einem die Stückgüter des Kommissionierauftrages enthaltenen Behälter 12 auf den der ersten Förderstrecke 3 vorgeordneten Zuführtisch 4 gelegt oder geschüttet und vereinzelt, und zwar zeitgleich, paarweise und voneinander beabstandet, der ersten Förderstrecke 3 zugeführt. Die Bedienungsperson 24 zieht dabei mit beiden Händen jeweils ein Stückgut zum Körper in das V-Band. Die Stückgüter werden vom V-Band übernommen und ausgerichtet dem Scanbereich zugeführt. Es können gleichzeitig zwei aufeinanderfolgende voneinander beabstandete Stückgüter 2 gescannt werden. Gescannte und hierbei erkannte Stückgüter gelangen zum Längsende der ersten Förderstrecke 3 und von dort in den Zwischenpuffer 23 oder Sammeltrichter.

Vor einem Ausschütten oder Legen der Stückgüter auf den Zuführtisch 4 werden jedoch großvolumige, schwere, empfindliche, unförmige und/oder runde Stückgüter aus dem Behälter 12 oder vom Zuführtisch 4 von der Bedienungsperson 24 ausgesondert und in einem Handscanner 7 oder durch Eingabe der Ist-Daten in die Tastatur 8 eines Terminals des Zentralrechners identifiziert und anschließend die identifizierten Stückgüter in den Behälter wieder zurückgelegt.

Der Behälter 12 wird auf die dritte Förderstrecke 20 gestellt und von dort unter den Ausgang der ersten Förderstrecke 3 in eine Bereitstellungsposition gefördert, der dann die gescannten und erkannten Stückgüter 2 des Zwischenpuffers 23 übernimmt.

Gescannte und nicht erkannte Stückgüter 2' werden durch die Aussteuereinrichtung 13 ausgesondert und über die zweite Förderstrecke 11 in den Bereich des Anfangs der ersten Förderstrecke 3 zurückgefördert.

Die rückgeführten Stückgüter 2' werden von der Bedienungsperson 24 durch den Handscanner 7 oder durch Eingabe der Ist-Daten in die Tastatur 8 des Zentralrechners identifiziert.

Hierbei erkannte Stückgüter des Kommissionierauftrages werden wieder über die erste Förderstrecke 3 dem Behälter 12 unter dem Ausgang der ersten Förderstrecke 3 zugeleitet.

Nicht erkannte Stückgüter werden zu einem Aussonderplatz überstellt oder in ein Kommissionierlager zurückgeleitet.

Zumindest bei Übereinstimmung der Soll-Daten mit den Ist-Daten wird das Stückgut einer Bedienungsperson 24 akustisch oder visuell kenntlich gemacht.

Auch wird ein Erkennungs-Protokoll über einen korrekten Kommissionierauftrag erstellt.

Ein Protokoll über eine Fehlkommissionierung kann ebenfalls erstellt werden.

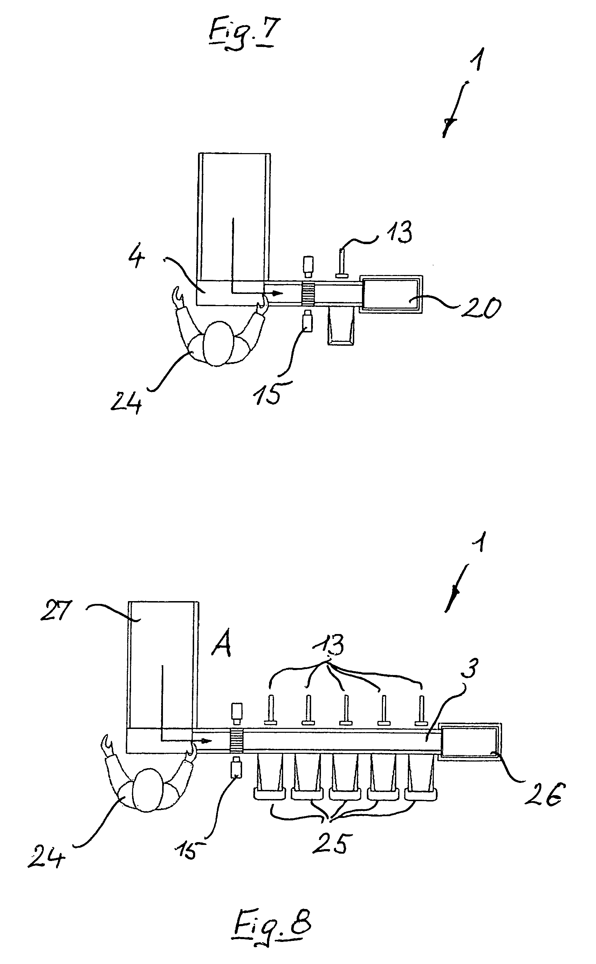

Die vorliegende Erfindung betrifft insbesondere die Anordnung 1 gemäß Figur 8, bei der die "Checkstation" gemäß der Prinzipskizze nach Figur 7 in eine Befüllstation für Einzelaufträge umgewandelt ist. Hierbei werden insbesondere mehrere hintereinander angeordnete Aussteuer-Einrichtungen 13 dann für ein seitliches oder unteres Auswerfen von durch die Scan-Einrichtungen 15 erkannten Stückgütern in zugeordnete Einzel-Auftragsbehälter 25 verwendet, während das Längsende der ersten Förderstrecke 3 als Auswurf von nicht-erkannten Stückgütern in Behälter 26 dient.

Förderstrecke 3 und Scanvorgang sowie das Bedienen der Anordnung 1 nach Figur 8 sind identisch der Ausführungsvariante nach den Figuren 1 bis 7.

Im besonderen sind im Bereich des Längsendes der ersten Förderstrecke 3 zumindest zwei durch den Zentralrechner ansteuerbare Aussteuer-Einrichtungen 13 für einen seitlichen Auswurf von durch die Scan-Einrichtung 15 erkannten Stückgütern vorgesehen, wobei jede der Aussteuer-Einrichtungen 13 einen positionierten Auftragsbehälter 25 eines bestimmten Kommissionierauftrags mit Stückgütern des bestimmten Kommissionierauftrags befüllt, und nicht-erkannte oder auszusortierenden Stückgütern am Längsende der ersten Förderstrecke 3 abgegeben werden.

Bei jeder Aussteuer-Einrichtung 13 kann an der seitlichen Abgabestelle ein Zwischenpuffer mit bodenseitig öffenbarer Klappe für eine gesteuerte Abgabe von gepufferten erkannten Stückgütern 2 in einen positionierten Auftragsbehälter 25 vorgesehen sein.

Ebenso kann sich am Längsende der ersten Förderstrecke 3 ein Zwischenpuffer 23 mit bodenseitig öffenbarer Klappe für eine gesteuerte Abgabe von gepufferten nicht-erkannten Stückgütern 2 in einen bereitgestellten Behälter 26 befinden.

Im Betrieb werden die Stückgüter 2 mehrerer Kommissionieraufträge in chaotischer Verteilung auf ein Zentralband 27 eines Kommissionierautomaten der Kommissionieranlage vorzugsweise zeitgleich abgegeben und über ein Zentralband 27 und gegebenenfalls Anschlussförderbänder zu einer Verteilstation A, insbesondere einer Versandstation, gefördert.

Die Stückgüter werden in der Verteilstation A durch eine Bedienungsperson 24 vom Zentralband 27 oder einem dem Zentralband nachgeordneten Stauplatz ergriffen und paarweise und voneinander beabstandet zeitgleich dem Eingang der ersten Förderstrecke 3 zugeführt, wie dies auch in der Variante nach den Figuren 1 bis 7 der Fall ist.

Um größere chaotisch verteilte Stückgüter-Mengen vom Zentralband 27 schneller abarbeiten zu können, können gegebenenfalls zwei Bedienungspersonen 24 vorgesehen sein, die in der Verteilstation A ein einziges Zentralband 27 mittels zweier paralleler Anordnungen 1 mit mittiger Positionierung der gleichen Auftragsbehälter 25 bedienen, die in der Verlängerung des Endes des Zentralbandes 27 angeordnet sind. Zentralband 27 und Anordnung 1 sind hierbei nicht in einem rechten Winkel zueinander angeordnet, wie dies im Ausführungsbeispiel nach Figur 8 gezeigt ist, sondern es verlaufen beide voneinander beabstandete Anordnungen 1 (die allerdings nur einmal die Auftragsbehälter 25 besitzen) parallel zum und seitlich versetzt vom Zentralband 27.

Ein mit Stückgütern 2 gefüllter Auftragsbehälter 25 eines kompletten Kommissionierauftrags wird zu einer Lastkraftwagen-Verladestation oder einer Parkstation gefördert oder transportiert.

Durch die Erfindung können also auf einfache Weise, sehr zuverlässig und sehr schnell eine Vielzahl von unsortierten, behälterlos zugeführten Stückgütern bzw. Produkten mehrerer Kommissionieraufträge durch die Anordnung 1 bei einfacher ergonomischer Bedienung gegebenenfalls gemäß Variante nach den Figuren 1 bis 7 erkannt, und die Kommissionieraufträge gemäß Variante nach den Figuren 1 bis 7 überprüft, und mehrere Kommissionieraufträge gemäß Figur 8 zusammengestellt werden. Atypische Stückgüter werden handgescannt.

## Patentansprüche

1. Anordnung (1) zum Erkennen und Steuern von mit einem Code versehenen Stückgütern (2) in einer Kommissionieranlage, wobei die Stückgüter vereinzelt und zentriert auf einer im Querschnitt V-förmigen Förderstrecke (3) durch eine Scan-Einrichtung (15) mit mehreren Einzelscannern (16, 17, 18) geleitet und in der Scan-Einrichtung (15) durch Lesen des Codes des Stückgutes (2) als Ist-Daten identifiziert und mit den in einem Zentralrechner gespeicherten Soll-Daten der Stückgüter-Menge verglichen oder erfasst werden, und bei Nicht-Übereinstimmung der Soll-Daten mit den Ist-Daten das Stückgut ausgesondert wird,
**dadurch gekennzeichnet,**
**dass** im Bereich des Längsendes der ersten Förderstrecke (3) zumindest zwei durch den Zentralrechner ansteuerbare Aussteuer-Einrichtungen (13) für einen seitlichen Auswurf von durch die Scan-Einrichtung (15) erkannten Stückgütern vorgesehen sind, wobei jede der Aussteuer-Einrichtungen (13) einen positionierten, in der Anordnung vorgesehenen Auftragsbehälter (25) eines bestimmten Kommissionierauftrags mit Stückgütern des bestimmten Kommissionierauftrags befüllt, und nicht-erkannte oder auszusortierende Stückgüter am Längsende der ersten Förderstrecke (3) abgegeben werden, und
**dass** bei jeder Aussteuer-Einrichtung (13) an der seitlichen Abgabestelle ein (erster) Zwischenpuffer mit bodenseitig öffenbarer (erster) Klappe für eine gesteuerte Abgabe von gepufferten erkannten Stückgütern (2) in den positionierten Auftragsbehälter (25) vorgesehen ist, und/oder am Längsende der ersten Förderstrecke (3) ein (zweiter) Zwischenpuffer (23) mit bodenseitig öffenbarer (zweiter) Klappe für eine gesteuerte Abgabe von gepufferten nicht-erkannten Stückgütern (2) in einen bereitgestellten Behälter (26) vorgesehen ist.

2. Anordnung nach Anspruch 1,
**gekennzeichnet durch** eine im Querschnitt V-förmige erste Förderstrecke (3), deren einer V-Schenkel ein angetriebenes Stückgut-Förderelement (5), vorzugsweise ein angetriebenes Umlauf-Förderband, ist, auf dem das geförderte Stückgut (2) rutschfest aufliegt, und deren anderer V-Schenkel ein stationäres Stückgut-Gleitelement (6), vorzugsweise ein Gleitblech, ist, auf dem das geförderte Stückgut (2) rutscht.

3. Anordnung nach Anspruch 2,
**dadurch gekennzeichnet,**
**dass** die Aussteuer-Einrichtung (13) zumindest einen Querschieber, zumindest eine Weiche oder zumindest eine Schwenkklappe (21) aufweist, die eine Auswurföffnung freigibt, wobei die Schwenkklappe (21) vorzugsweise eine gegenläufig angesteuerte Doppelklappe mit zwei Schwenkachsen (22) ist.

4. Anordnung nach einem der Ansprüche 1 bis 3,
**dadurch gekennzeichnet,**
**dass** die erste Förderstrecke (3) horizontal angeordnet ist.

5. Anordnung nach einem der Ansprüche 1 bis 4,
**dadurch gekennzeichnet,**
**dass** die beiden V-Schenkel der ersten Förderstrecke (3) einen Winkel von mindestens 90 Grad einschließen, vorzugsweise exakt einen rechten Winkel bilden.

6. Anordnung nach einem der Ansprüche 1 bis 5,
**dadurch gekennzeichnet,**
**dass** zumindest einer der V-Schenkel, vorzugsweise beide V-Schenkel, zur Horizontalen einen Winkel von 45 Grad bildet bzw. bilden.

7. Anordnung nach einem der Ansprüche 1 bis 6,
**dadurch gekennzeichnet,**
**dass** die erste Förderstrecke (3) in Längsrichtung aus zwei zueinander fluchtenden (ersten und zweiten) Förderabschnitten zusammengesetzt ist, bestehend jeweils aus einem Stückgut-Förderelement (5) und einem Stückgut-Gleitelement (6), wobei sich dem Stückgut-Förderelement (5) des ersten Förderabschnitts das Stückgut-Gleitelement (6) des zweiten Förderabschnitts fluchtend anschließt, und umgekehrt sich dem Stückgut-Gleitelement (6) des ersten Förderabschnitts das Stückgut-Förderelement (5) des zweiten Förderabschnitts fluchtend anschließt.

8. Anordnung nach Anspruch 7,
**dadurch gekennzeichnet,**
**dass** dem nicht licht-transparenten Stückgut-Gleitelement (6) ein stationärer licht-transparenter Abschnitt (10), insbesondere ein Glasfenster, fluchtend unmittelbar nachgeordnet ist, wobei die Länge des Stückgut-Förderelements (5) in etwa der Summe der Einzellängen des Stückgut-Gleitelements (6) und des licht-transparenten Abschnitts (10) entspricht.

9. Anordnung nach Anspruch 8,
**dadurch gekennzeichnet,**
**dass** im Bereich des licht-transparenten Abschnitts (10), insbesondere des Glasfensters, eine dreidimensionale Scan-Einrichtung (15) mit vorzugsweise drei Einzelscannern (16, 17, 18) vorgesehen ist, deren erster Einzelscanner (16) durch den licht-transparenten Abschnitt (10) den möglichen Code auf der Gleitfläche eines gefördertes Stückgut liest, und deren andere Einzelscanner (17, 18) mögliche Codes anderer Seitenflächen des geförderten Stückguts lesen, jedoch nicht die Seitenfläche des Stückguts liest, welche auf dem Stückgut-Förderelement (5) rutschfest aufliegt.

10. Anordnung nach Anspruch 9,
**dadurch gekennzeichnet,**
**dass** jeder der beiden Förderabschnitte eine (erste bzw. zweite) Scan-Einrichtung (15) mit vorzugsweise jeweils drei Einzelscannern (16, 17, 18) sowie einen (ersten bzw. zweiten) licht-transparenten Abschnitt (10), insbesondere ein (erstes und zweites) Glasfenster, aufweist, wobei ein Einzelscanner (16) des zweiten Förderabschnitts durch den zugeordneten zweiten licht-transparenten Abschnitts (10) einen möglichen Code der bislang ungelesenen Seitenfläche des Stückguts liest, welche zuvor auf dem Stückgut-Förderelement(5) des ersten Förderabschnitts rutschfest auflag.

11. Anordnung nach einem der Ansprüche 1 bis 10,
**dadurch gekennzeichnet,**
**dass** die Scan-Einrichtung(en)(15) in einem Scantunnel (14) angeordnet ist bzw. sind.

12. Anordnung nach einem der Ansprüche 1 bis 11,
**gekennzeichnet durch**
eine Abstandserkennungseinrichtung, insbesondere eine Abstandslichtschranke, zwecks automatischer Abschaltung des Antriebs des Stückgut-Förderelements (5) bei Unterschreitung eines Mindestabstands von zwei aufeinanderfolgenden zu scannenden Stückgütern.

13. Verfahren zum Erkennen und Steuern von mit einem Code versehenen Stückgütern (2) in einer Kommissionieranlage, wobei die Stückgüter vereinzelt und zentriert auf einer im Querschnitt V-förmigen Förderstrecke (3) durch eine Scan-Einrichtung (15) mit mehreren Einzelscannern (16, 17, 18) geleitet und in der Scan-Einrichtung (15) durch Lesen des Codes des Stückgutes (2) als Ist-Daten identifiziert und mit den in einem Zentralrechner gespeicherten Soll-Daten der Stückgüter-Menge verglichen oder erfasst werden, und bei Nicht-Übereinstimmung der Soll-Daten mit den Ist-Daten das Stückgut ausgesondert wird, mittels einer Anordnung nach einem der Ansprüche 1 bis 12,
**dadurch gekennzeichnet,**
**dass** die Stückgüter (2) mehrerer Kommissionieraufträge in chaotischer Verteilung auf ein Zentralband (27) eines Kommissionierautomaten der Kommissionieranlage zeitgleich abgegeben und über das Zentralband (27) und gegebenenfalls Anschlussförderbänder zu einer Verteilstation (A), insbesondere einer Versandstation, gefördert werden, und dass vorzugsweise durch eine Bedienungsperson (24) jeweils zwei Stückgüter in der Verteilstation (A) voneinander beabstandet dem Eingang der ersten Förderstrecke (3) zugeführt werden.

14. Verfahren nach Anspruch 13,
**dadurch gekennzeichnet,**
**dass** zwei Bedienungspersonen (24) in der Verteilstation (A) ein einziges Zentralband (27) mittels zweier paralleler Anordnungen (1) mit mittiger Positionierung der gleichen Auftragsbehälter (25) bedienen.

15. Verfahren nach Anspruch 13 oder 14,
**dadurch gekennzeichnet,**
**dass** ein mit Stückgütern (2) gefüllter Auftragsbehälter (25) eines kompletten Kommissionierauftrags zu einer Verladestation oder einer Parkstation gefördert oder transportiert wird, wobei ein Erkennungs-Protokoll über einen korrekten Kommissionierauftrag oder ein Protokoll über eine Fehlkommissionierung erstellt wird.

## Claims

1. Device (1) for recognizing and guiding individually packaged products (2) provided with a code in a commissioning unit, whereby the individually packaged products are guided separated and centered on a conveying track (3) that has a V-shaped cross section through a scanning device (15) with a plurality of individual scanners (16, 17, 18) and are identified in the scanning device (15) by reading the code of the individually packaged product (2) as actual data and are compared or detected with the desired data, stored in a central computer, of the individually packaged product quantity, and if there is disagreement of the desired data with the actual data, the individually packaged product is separated out, **characterized in that**
at least two selecting means (13), which can be controlled by the central computer, are provided in the area of the longitudinal end of the first conveying track (3) for a lateral ejection of individually packaged products recognized by the scanning device (15), whereby each of the selecting means (13) fills a positioned order container (25) of a certain commissioning order with individually packaged products of the certain commissioning order, and individually packaged products which are not recognized or are to be sorted out are delivered at the longitudinal end of the first conveyor track (3), and
in each selecting means (13), a (first) buffer with a (first) flap that can be opened on the bottom for a guided delivery of buffered, recognized individually packaged products (2) into a positioned order container (25) is provided at the lateral delivery point, and/or a (second) buffer (23) with a (second) flap that can be opened on the bottom for a guided delivery of buffered, non-recognized individually packaged products (2) into a container (26) kept ready is provided at the longitudinal end of the first conveying track (3).

2. Device in accordance with claim 1,
**characterized by** a first conveying track (3), which has a V-shaped cross section, whose one V leg is a driven individually packaged product-conveying element (5), preferably a driven circular conveying belt, on which the conveyed individually packaged product (2) lies in a nonsliding manner, and whose other V leg is a stationary individually packaged product-sliding element (6), preferably a sliding plate, on which the conveyed individually packaged product (2) slides.

3. Device in accordance with claim 2,
**characterized in that**
the selecting means (13) has at least one transverse pusher, at least one diverter or at least one pivoting flap (21), which releases an ejection opening, wherein the pivoting flap (21) preferably is a counter-controlled double flap with two pivot axes (22).

4. Device in accordance with one of the claims 1 through 3,
**characterized in that**
the first conveying track (3) is arranged horizontally.

5. Device in accordance with one of the claims 1 through 4,
**characterized in that**
the two V legs of the first conveying track (3) form an angle of at least 90°, and preferably form exactly a right angle.

6. Device in accordance with one of the claims 1 through 5,
**characterized in that**
at least one of the V legs, and preferably both V legs, forms or form an angle to 45° to the horizontal.

7. Device in accordance with one of the claims 1 through 6,
**characterized in that**
in the longitudinal direction, the first conveying track (3) is composed of two (first and second) conveying sections aligned with one another, each consisting of an individually packaged product-conveying element (5) and an individually packaged product-sliding element (6), whereby the individually packaged product-sliding element (6) of the second conveying section is connected, aligned, to the individually packaged product-conveying element (5) of the first conveying section, and inversely, the individually packaged product-conveying element (5) of the second conveying section is connected, aligned, to the individually packaged product-sliding element (6) of the first conveying section.

8. Device in accordance with claim 7,
**characterized in that**
a stationary light-transparent section (10), especially a glass window, is arranged directly downstream aligned with the non-light-transparent individually packaged product-sliding element (6), whereby the length of the individually packaged product-conveying element (5) corresponds approximately to the sum of the individual lengths of the individually packaged product-sliding element (6) and of the light-transparent section (10).

9. Device in accordance with claim 8,
**characterized in that**
in the area of the light-transparent section (10), and especially of the glass window, a three-dimensional scanning device (15) with preferably three individual scanners (16, 17, 18) is provided, whose first individual scanner (16) reads the possible code on the sliding surface of a conveyed individually packaged product through the light-transparent section (10), and whose other individual scanners (17, 18) read possible codes of other side surfaces of the conveyed individually packaged product, but do not read the side surface of the individually packaged product that lies in a nonsliding manner on the individually packaged product-conveying element (5).

10. Device in accordance with claim 9,
**characterized in that**
each of the two conveying sections has a (first or second) scanning device (15), each with preferably three individual scanners (16, 17, 18) as well as a (first or second) light-transparent section (10), especially a (first and second) glass window, whereby an individual scanner (16) of the second conveying section reads a possible code of the up to now unread side surface of the individually packaged product that was lying beforehand in a nonsliding manner on the individually packaged product-conveying element (5) of the first conveying section through the associated second light-transparent section (10).

11. Device in accordance with one of the claims 1 through 10,
**characterized in that**
the scanning device(s) (15) is or are arranged in a scanning tunnel (14).

12. Device in accordance with one of the claims 1 through 11,
**characterized by**
a distance recognition means, especially a distance light barrier, for the purpose of automatic turning off of the drive of the individually packaged product-conveying element (5) in case of undershooting a minimum distance of two individually packaged products to be scanned consecutively.

13. Process for recognizing and guiding individually packaged products provided with a code, whereby the individually packaged products of a quantity are guided separated and centered on a first conveying track (3) that has a V-shaped cross section through a scanning device (15) with a plurality of individual scanners (16, 17, 18) and are identified in the scanning device (15) by reading the code of the individually packaged product (2) as actual data and are compared or detected with the desired data, which are stored in a central computer, of the individually packaged product quantity, and if there is disagreement of the desired data with the actual data, the individually packaged product is separated out, by means of a device in accordance with one of the claims 1 through 12,
**characterized in that**
the individually packaged products (2) of a plurality of commissioning orders are preferably simultaneously delivered in chaotic distribution onto a central belt (27) of an automatic commissioning unit of the commissioning unit and are conveyed via the central belt (27) and optionally joining conveying belts to a distribution station (A), and especially to a shipping station, and **in that** in the distribution station (A), the individually packaged products are preferably fed by an operator (24) in pairs and spaced apart from one another to the inlet of the first conveying track (3).

14. Process in accordance with claim 13,
**characterized in that**
two operators (24) operate a single central belt (27) in the distribution station (A) by means of two parallel devices (1) with central positioning of identical order containers (25).

15. Process in accordance with claim 13 or 14,
**characterized in that**
an order container (25) filled with individually packaged products (2) of a complete commissioning order is fed or transported to a loading station or a parking station, wherein a recognition report is prepared about a correct commissioning order or a report is prepared about an error in commissioning.

## Revendications

1. Agencement (1) permettant d'identifier et de diriger des marchandises individuelles (2) pourvues d'un code dans une installation de préparation de commandes, les marchandises individuelles étant guidées de façon individualisée et centrée sur un tronçon de transport (3) prenant une forme de V en section transversale de façon à passer au travers d'un dispositif de scan (15) doté de plusieurs scanners individuels (16, 17, 18) et étant identifiées dans le dispositif de scan (15) par lecture du code de la marchandise individuelle (2) servant de données réelles et étant répertoriées ou comparées à des données théoriques de quantité de marchandises individuelles mémorisées dans un ordinateur central et la marchandise individuelle étant retirée en cas de non-correspondance des données théoriques et des données réelles,
**caractérisé en ce que**
au moins deux dispositifs d'écartement (13) pouvant être pilotés par l'ordinateur central sont prévus dans la région de l'extrémité longitudinale du premier tronçon de transport (3) pour une éjection latérale des marchandises individuelles reconnues par le dispositif de scan (15), chacun des dispositifs d'écartement (13) remplissant un conteneur de commande (25) positionné prévu dans l'agencement et correspondant à une commande définie avec les marchandises individuelles de la commande définie et les marchandises individuelles non reconnues ou à retirer étant sorties au niveau de l'extrémité longitudinale du premier tronçon de transport (3), et
un (premier) tampon intermédiaire doté d'un (premier) clapet pouvant s'ouvrir au niveau du fond est prévu au niveau de chaque dispositif d'écartement (13) placé au niveau du point de délivrance latéral pour délivrer de façon commandée dans le conteneur de commande (25) positionné à cet effet des marchandises individuelles (2) reconnues et placées dans le tampon et/ou un (deuxième) tampon intermédiaire (23) pouvant s'ouvrir au niveau du fond est prévu au niveau de l'extrémité longitudinale du premier tronçon de transport (3) pour une délivrance commandée des marchandises individuelles (2) non reconnues dans un conteneur (26) mis à disposition.

2. Agencement selon la revendication 1,
**caractérisé par**
un premier tronçon de transport (3) en forme de V en section transversale dont un montant du V est un élément de transport de marchandise individuelle (5) entraîné, de préférence un tapis de transport tournant entraîné, sur lequel la marchandise individuelle (2) transportée repose solidement sans glissement possible et dont l'autre montant du V est un élément de glissement de marchandise individuelle (6) stationnaire, de préférence une tôle glissante, sur lequel la marchandise individuelle (2) transportée glisse.

3. Agencement selon la revendication 2,
**caractérisé en ce que**
le dispositif d'écartement (13) comporte au moins un poussoir transversal, au moins un aiguillage ou au moins un clapet basculant (21) libérant une ouverture d'éjection, le clapet basculant (21) étant de préférence un double clapet commandé de façon opposée avec deux axes de basculement (22).

4. Agencement selon l'une quelconque des revendications 1 à 3,
**caractérisé en ce que**
le premier tronçon de transport (3) est disposé de façon horizontale.

5. Agencement selon l'une quelconque des revendications 1 à 4,
**caractérisé en ce que**
les deux montants du V du premier tronçon de transport (3) intègrent un angle d'au moins 90 degrés, formant de préférence exactement un angle droit.

6. Agencement selon l'une quelconque des revendications 1 à 5,
**caractérisé en ce que**
au moins un des montants du V, de préférence les deux montants du V, forme et/ou forment un angle de 45 degrés par rapport à l'horizontale.

7. Agencement selon l'une quelconque des revendications 1 à 6,
**caractérisé en ce que**
le premier tronçon de transport (3) se compose, dans la direction longitudinale, de deux (première et deuxième) sections de transport alignées l'une par rapport à l'autre respectivement composées d'un élément de transport de marchandise individuelle (5) et d'un élément de glissement de marchandise individuelle (6), l'élément de glissement de marchandise individuelle (6) de la deuxième section de transport étant raccordé de façon alignée à l'élément de transport de marchandise individuelle (5) de la première section de transport et inversement, l'élément de transport de marchandise individuelle (5) de la deuxième section de transport étant raccordé de façon alignée à l'élément de glissement de marchandise individuelle (6) de la première section de transport.

8. Agencement selon la revendication 7,
**caractérisé en ce que**
une section transparente à la lumière (10) stationnaire, notamment une fenêtre en verre, est placée directement en aval, de façon alignée, de l'élément de glissement de marchandise individuelle (6) transparent à la lumière, la longueur de l'élément de transport de marchandise individuelle (5) correspondant approximativement à la somme des longueurs individuelles de l'élément de glissement de marchandise individuelle (6) et de la section transparente à la lumière (10).

9. Agencement selon la revendication 8,
**caractérisé en ce que**
un dispositif de scan (15) tridimensionnel doté de préférence de trois scanners individuels (16, 17, 18) est prévu dans la région de la section transparente à la lumière (10), notamment de la fenêtre en verre, dont le premier scanner individuel (16) lit à travers la section transparente à la lumière (10) le code possible sur la surface de glissement d'une marchandise individuelle transportée et dont les autres scanners individuels (17, 18) lisent les codes possibles sur les autres surfaces latérales de la marchandise individuelle transportée, sans lire toutefois la surface latérale de la marchandise individuelle reposant solidement sans glissement possible sur l'élément de transport de marchandise individuelle (5).

10. Agencement selon la revendication 9,
**caractérisé en ce que** :
chacune des deux sections de transport comporte un (premier et/ou deuxième) dispositif de scan (15) doté de préférence de respectivement trois scanners individuels (16, 17, 18) ainsi qu'une (première et/ou deuxième) section transparente à la lumière (10), notamment une (première et deuxième) fenêtre en verre, un scanner individuel (16) de la deuxième section de transport lisant à travers la deuxième section transparente à la lumière (10) associée un code possible de la surface latérale jusqu'ici non lue de la marchandise individuelle car reposant auparavant solidement sans glissement possible sur l'élément de transport de marchandise individuelle (5) de la première section de transport.

11. Agencement selon l'une quelconque des revendications 1 à 10,
**caractérisé en ce que**
le ou les dispositifs de scan (15) est disposé et/ou sont disposés dans un tunnel de lecture (14).

12. Agencement selon l'une quelconque des revendications 1 à 11,
**caractérisé par**
une barrière lumineuse de reconnaissance de distance, notamment une barrière lumineuse de distance, servant à déconnecter automatiquement l'entraînement de l'élément de transport de marchandise individuelle (5) lors du passage en dessous d'une distance minimale de deux marchandises individuelles successives à scanner.

13. Procédé permettant d'identifier et de diriger des marchandises individuelles (2) pourvues d'un code dans une installation de préparation de commandes, les marchandises individuelles étant guidées de façon individualisée et centrée sur un tronçon de transport (3) prenant une forme de V en section transversale de façon à passer au travers d'un dispositif de scan (15) doté de plusieurs scanners individuels (16, 17, 18) et étant identifiées dans le dispositif de scan (15) par lecture du code de la marchandise individuelle (2) servant de données réelles et étant répertoriées ou comparées à des données théoriques de quantité de marchandises individuelles mémorisées dans un ordinateur central et la marchandise individuelle étant retirée, en cas de non-correspondance des données théoriques et des données réelles, à l'aide d'un agencement selon l'une quelconque des revendications 1 à 12,
**caractérisé en ce que**
les marchandises individuelles (2) de plusieurs commandes sont remises simultanément selon une répartition chaotique sur un tapis central (27) d'un automate de préparation de commandes de l'installation de préparation de commandes et sont transportées par le tapis central (27) et le cas échéant des tapis de transport de raccordement jusqu'à une station de répartition (A), notamment une station d'expédition, et que respectivement deux marchandises individuelles espacées l'une par rapport à l'autre dans la station de répartition (A) sont amenées à l'entrée du premier tronçon de transport (3), de préférence par le truchement d'un opérateur (24).

14. Procédé selon la revendication 13,
**caractérisé en ce que**
deux opérateurs (24) placés dans la station de répartition (A) utilisent un tapis central (27) unique à l'aide de deux agencements (1) parallèles avec un positionnement central du même conteneur de commande (25).

15. Procédé selon la revendication 13 ou 14,
**caractérisé en ce que**
un conteneur de commande (25) rempli de marchandises individuelles (2) correspondant à un ordre de commande complet est transporté ou amené à une station d'expédition ou à une station de mise en attente, engendrant la mise en oeuvre d'un protocole d'identification relatif à une préparation de commande correcte ou un protocole relatif à une préparation de commande erronée.
